# EUROPEAN PATENT APPLICATION

(11) **EP 3 451 182 A1**
(43) Date of publication of application: **06.03.2019**
(21) Application number: 18190514.2
(22) Date of filing: 23.08.2018
(51) Int. Cl.: G06F 13/40

(54) **CONNECTION CIRCUIT**

(30) Priority: 25.08.2017 JP 2017162469
(71) Applicant: Toshiba TEC Kabushiki Kaisha, Tokyo 141-8562 (JP)
(72) Inventor: YAMANE, Yoichi, Shinagawa-ku,, Tokyo 141-8562 (JP)
(74) Representative: Takeuchi, Maya

(57) **Abstract**

In accordance with an embodiment, a connection circuit powered by a power supply circuit includes a connector configured to connect with an external device, a chip set configured to connect with the connector via one or more data lines and control serial communication with the external device via the data lines, and a switch circuit arranged between the connector and the chip set and configured to disconnect a connection between the connector and the chip set via the data lines when power is not supplied from the power supply circuit.

## Description

### FIELD

Embodiments described herein relate generally to a connection circuit.

### BACKGROUND

Conventionally, an information processing apparatus such as a personal computer or a Point of Sales (POS) terminal is connected with peripheral devices via a Universal Serial Bus (USB) interface. The communication via the USB interface is controlled by a chip set of the computer according to the USB standard.

In such an information processing apparatus having the USB interface, it is known that electrostatic discharge may occur in the chip set, which causes a current to flow out on the data line and make the voltage an unintended level. As a result, the chip set may not be able to communicate with the USB device correctly.

### SUMMARY OF INVENTION

To solve the above-cited problems, there is provided a connection circuit powered by a power supply circuit, comprising:
a connector configured to connect with an external device;
a chip set configured to connect with the connector via one or more data lines and control serial communication with the external device via the data lines; and
a switch circuit arranged between the connector and the chip set and configured to disconnect a connection between the connector and the chip set via the data lines when power is not supplied from the power supply circuit.

Preferably, the chip set may control the serial communication according to a Universal Serial Bus (USB) protocol.

Preferably, the switch circuit may comprise a field effect transistor.

Preferably, when the power is supplied from the power supply circuit, the connector may supply power to the external device.

Preferably, the data lines may be a pair of differential transmission lines, and
the switch circuit may disconnect the connection via the pair of differential transmission lines when the power is not supplied from the power supply circuit.

Preferably, the switch circuit may connect the connector and the chip set when the power is supplied from the power supply circuit.

Preferably the connection circuit may be included in a point of sales (POS) terminal, and
the switch circuit may disconnect the connection when the POS terminal is shut down.

Preferably, the connection circuit may be included in a POS terminal, and
the switch circuit may disconnect the connection when the POS terminal is restarted.

Preferably, the chip set may communicate with the external device to determine a speed mode for the serial communication after the power is supplied from the power supply circuit and the switch circuit connects the connector and the chip set.

In another exemplary embodiment, there is also provided an information processing apparatus comprising:
a power supply circuit; and
the connection circuit according to any one of the preceding embodiments.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example of a configuration of an electronic circuit board in a state in which a USB device is connected to a POS terminal according to an embodiment;
Fig. 2 is a timing chart illustrating an outline of a connection process when the electronic circuit board is in a normal state according to an embodiment;
Fig. 3 is a timing chart illustrating an outline of a connection process when a current flows out from a chip set according to a prior art; and
Fig. 4 is a timing chart illustrating an outline of a connection process when the current flows out from the chip set in the electronic circuit board according to an embodiment.

### DETAILED DESCRIPTION

In accordance with an embodiment, a connection circuit powered by a power supply circuit includes a connector configured to connect with an external device, a chip set configured to connect with the connector via one or more data lines and control serial communication with the external device via the data lines, and a switch circuit arranged between the connector and the chip set and configured to disconnect a connection between the connector and the chip set via the data lines when power is not supplied from the power supply circuit.

Embodiments of a connection circuit will be described in detail below with reference to the accompanying drawings. The embodiments described below can be applied to other circuits other than the connection circuit. The connection circuit of an embodiment is an application example to an electronic circuit board that controls an information processing apparatus such as a POS terminal.

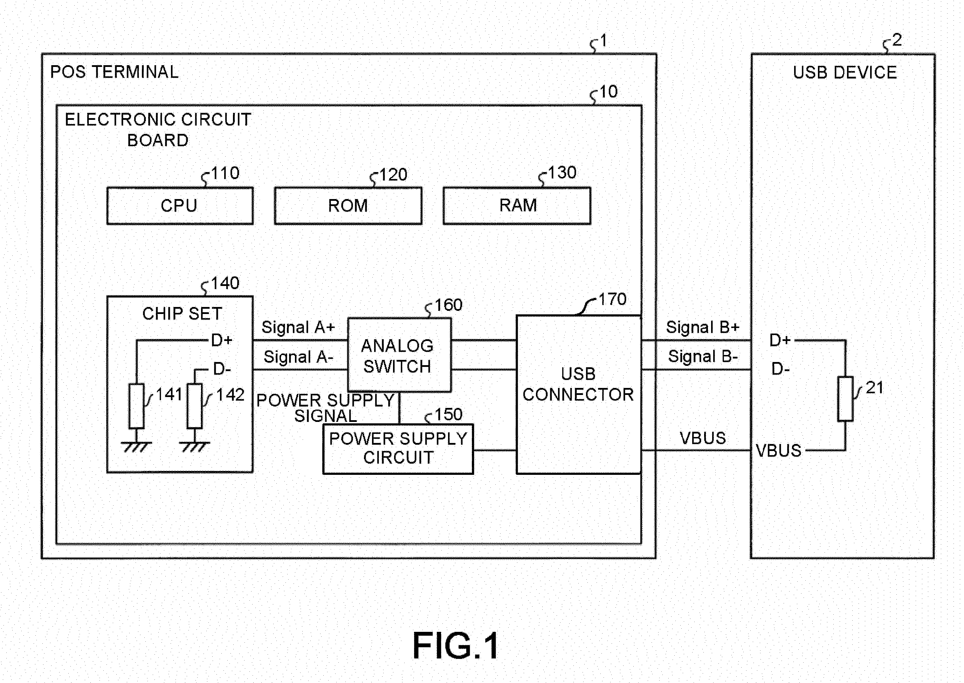

Fig. 1 is a block diagram illustrating an example of a configuration of an electronic circuit board 10 in a state in which a USB device 2 is connected to a POS terminal 1 according to an embodiment. The POS terminal 1 is an information processing apparatus that executes a sales registration process for registering a commodity to be sold, a checkout process for executing checkout of the commodity registered by the sales registration process, and the like. The USB device 2 is a peripheral device that communicates with the POS terminal 1 connected therewith via a USB interface. The USB device 2 is a bus power device for receiving supply of electric power via the USB rather than a self-power device that receives supply of the electric power from an AC adapter, a battery, or the like. For example, the USB device 2 may be a receipt printer that prints a receipt, a scanner device that reads a code symbol attached to a commodity, or the like.

The POS terminal 1 is provided with the electronic circuit board 10 such as a motherboard in a housing thereof. The electronic circuit board 10 includes a Central Processing Unit (CPU) 110, a Read Only Memory (ROM) 120, a Random Access Memory (RAM) 130, a chip set 140, a power supply circuit 150, an analog switch 160, and a USB connector 170.

The CPU 110 collectively controls the operation of the POS terminal 1. The ROM 120 stores various programs and data. The RAM 130 temporarily stores various programs and various data. Then, the CPU 110 executes a program stored in the ROM 120 or the like by using the RAM 130 as a work area (working area).

The chip set 140 is an integrated circuit that controls communication with an external device via a serial interface in response to a request from the CPU 110. For example, the chip set 140 controls the communication conforming to a USB standard. The chip set 140 is not limited to one integrated circuit, and may comprise a plurality of integrated circuits. A data line which is a transmission line of data is connected with the chip set 140. In an embodiment, since the USB is a USB of a differential transmission system, the chip set 140 has a pair of data lines, i.e., data lines for transmitting a D+ signal and a D- signal which conform to the USB standard.

The data line for transmitting the D+ signal is connected to a pull-down resistor 141 connected to the ground in the chip set 140. The pull-down resistor 141 has a resistance value of, for example, 15 kΩ. The data line for transmitting the D- signal is connected to a pull-down resistor 142 connected to the ground in the chip set 140. The pull-down resistor 142 has a resistance value of, for example, 15 kΩ. The data line for transmitting the D+ signal from the chip set 140 to the analog switch 160 is referred to as a data line for transmitting a Signal A+ signal. The data line for transmitting the D- signal from the chip set 140 to the analog switch 160 is referred to as a data line for transmitting a Signal A- signal.

The power supply circuit 150 supplies the electric power input from an Alternating Current (AC) power supply via an AC adapter to each section of the POS terminal 1. The power supply circuit 150 outputs a power supply signal indicating that the POS terminal 1 is in an ON state when the power supply of the POS terminal 1 is turned on, i.e., when the POS terminal 1 is activated. Furthermore, the power supply circuit 150 supplies the electric power used by the USB device 2 according to a VBUS signal when the power supply of the POS terminal 1 is turned on, i.e., when the POS terminal 1 is activated. Here, the VBUS signal is used for supplying the electric power to the USB device 2.

On the other hand, the power supply circuit 150 outputs a power supply signal indicating that the POS terminal 1 is in an OFF state when the power supply of the POS terminal 1 is turned off, i.e., when the POS terminal 1 is stopped or shut down. Furthermore, the power supply circuit 150 stops supplying the electric power to the USB device 2 when the power supply of the POS terminal 1 is turned off, i.e., when the POS terminal 1 is stopped. The stop of the POS terminal 1 refers to a state in which the POS terminal 1 is shut down, and the electric power is supplied via an outlet or the like.

The analog switch 160 switches the connection and disconnection between the chip set 140 and the USB connector 170 when a predetermined condition is satisfied. For example, the analog switch 160 is a switching element such as a Field Effect Transistor (FET). For example, the analog switch 160 switches the connection and the disconnection based on an activation state of the POS terminal 1 provided with the electronic circuit board 10. More specifically, the analog switch 160 connects the chip set 140 and the USB connector 170 if the power supply signal indicates that the power supply of the POS terminal 1 is in the ON state. On the other hand, the analog switch 160 disconnects the chip set 140 from the USB connector 170 if the power supply signal indicates the power supply of the POS terminal 1 is in the OFF state. The analog switch 160 is not limited to an electronic switch such as a FET, and it may be a mechanical switch.

The USB connector 170 connects the POS terminal 1 and the USB device 2. The USB connector 170 is connected with the data line for transmitting the Signal A+ signal, the data line for transmitting the Signal A- signal, and a power supply line for supplying the electric power to the USB device 2 according to the VBUS signal. The data line for transmitting the Signal A+ signal and the data line for transmitting the Signal A- signal are connected to the chip set 140 via the analog switch 160. The power supply line of the VBUS signal for supplying the electric power to the USB device 2 is connected to the power supply circuit 150.

If the USB device 2 is connected, the USB connector 170 connects the data line for transmitting the Signal A+ signal and a data line for transmitting the D+ signal of the USB device 2. The USB connector 170 connects the data line for transmitting the Signal A- signal and a data line for transmitting the D-signal of the USB device 2. Furthermore, the USB connector 170 connects the power supply line and the VBUS signal.

The data line for transmitting the D+ signal from the USB connector 170 to the USB device 2 is referred to as a data line for transmitting a Signal B+ signal. The data line for transmitting the D- signal from the USB connector 170 to the USB device 2 is referred to as a data line for transmitting a Signal B- signal.

In the USB device 2, the data line for transmitting the D+ signal is connected to a pull-up resistor 21 connected to the VBUS signal. The pull-up resistor 21 has a resistance value of 1.5 kΩ, for example.

Here, according to the USB standard, it is stipulated to determine a communication speed of the external device connected according to a protocol called Chirp handshake. In the USB standard, it is stipulated that in a device in a full speed mode or a high speed mode, D+ signal is set as a High level, and the D- signal is set as a Low level. Then, if the data line for transmitting the D+ signal of the USB device 2 is connected to the USB connector 170 when the POS terminal 1 is in the ON state, the D+ signal of the USB device 2 is pulled up to the High level by the pull-up resistor 21 to which the electric power is supplied according to the VBUS signal. On the other hand, the D- signal of the USB device 2 is pulled down to the Low level by the pull-down resistor 142 of the chip set 140. The USB device 2 shown in Fig. 1 is in the full speed mode or the high speed mode.

Next, a connection operation between the POS terminal 1 and the USB device 2 is described.

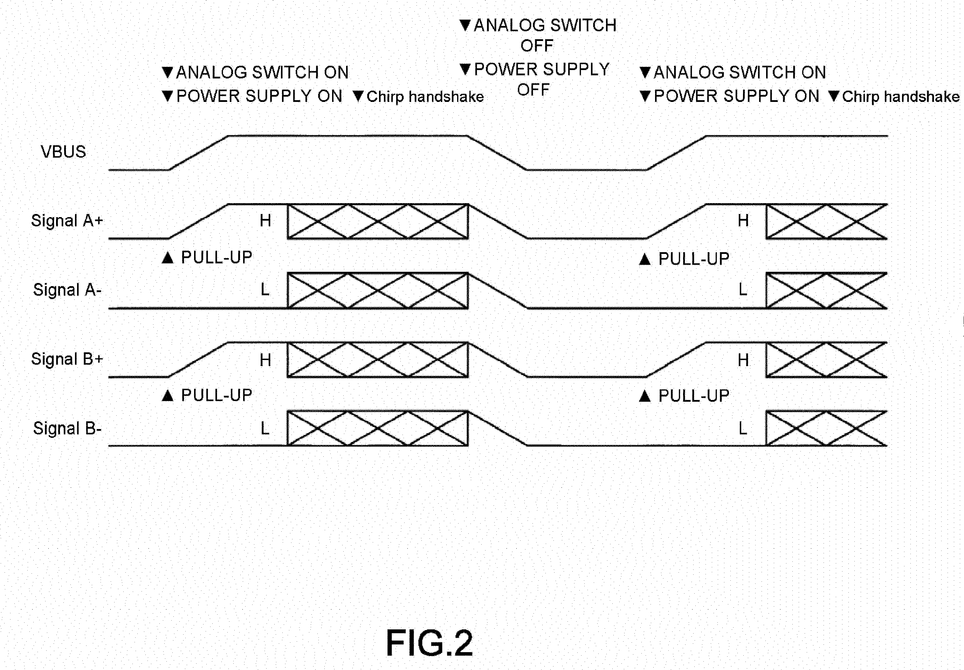

First, the operation of the circuit when static electricity is not applied and the POS terminal 1 and the USB device 2 are normally connected is described. Here, Fig. 2 is a timing chart illustrating the outline of the connection process when the electronic circuit board 10 normally operates according to an embodiment.

If the power supply of the POS terminal 1 is turned on, the VBUS signal becomes the High level since the electric power from the power supply circuit 150 is received.

The Signal B+ signal becomes a High level due to the influence of the pull-up resistor 21 supplied with the electric power according to the VBUS signal. The Signal A+ signal becomes the High level as the Signal B+ signal becomes the High level. On the other hand, the Signal A- signal becomes the Low level by the pull-down resistor 142. The Signal B- signal becomes the Low level as the Signal A- signal becomes the Low level.

The chip set 140 determines the communication speed of the USB device 2 according to the Chirp handshake.

If the power supply of the POS terminal 1 is turned off, both the Signal A+ signal and the Signal A- signal become the Low level due to the influence of the pull-down resistor 141 and the pull-down resistor 142. Both the Signal B+ signal and the Signal B- signal become the Low level as the Signal A+ signal and the Signal A- signal become the Low level.

If the power supply of the POS terminal 1 is turned on again, the VBUS signal, the Signal B+ signal, and the Signal A+ signal all become the High level similarly to the last time.

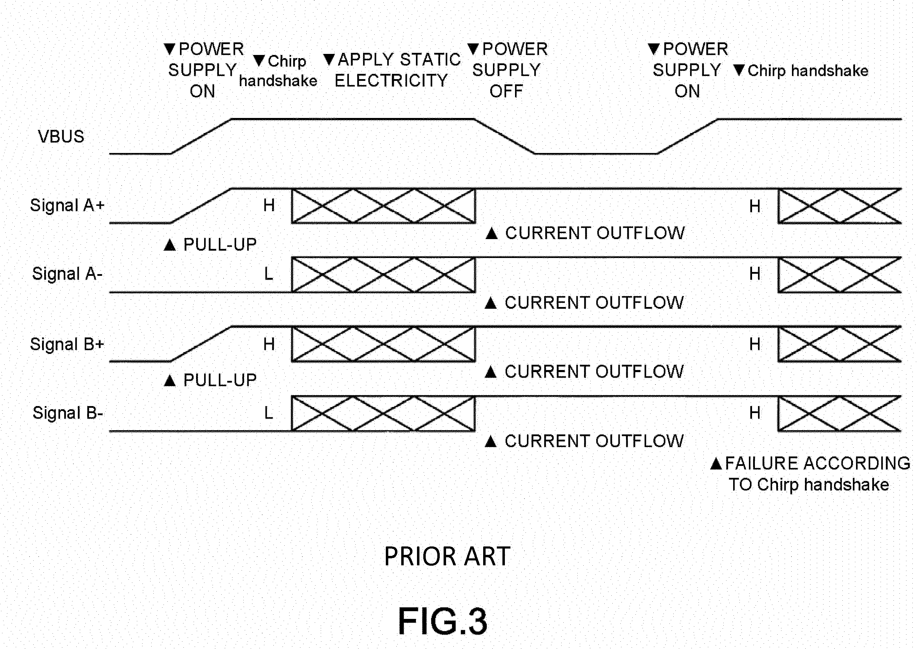

Next, in the prior art, the operation of the circuit in the case in which the static electricity is applied and the current flows out from the chip set 140 is described for comparison. Here, Fig. 3 is a timing chart illustrating the outline of the connection process when the current flows out from the chip set 140 in the conventional art. The timing chart shown in Fig. 3 is a timing chart illustrating the outline of the connection process in the case in which there is no analog switch 160 in the electronic circuit board 10.

Before the static electricity is applied, each signal operates in the same manner as the connection process in the normal state.

When the power supply of the POS terminal 1 is turned on, the VBUS signal becomes the High level as the supply of the electric power from the power supply circuit 150 is received.

The Signal B+ signal becomes the High level due to the influence of the pull-up resistor 21 supplied with the electric power according to the VBUS signal. The Signal A+ signal becomes the High level as the Signal B+ signal becomes the High level. On the other hand, the Signal A- signal becomes the Low level by the pull-down resistor 142. The Signal B- signal becomes the Low level as the Signal A- signal becomes the Low level.

The chip set 140 determines the communication speed of the USB device 2 according to the Chirp handshake.

If the static electricity is applied due to the electrostatic discharge, the current may flow out from the chip set 140. The chip set 140 sets both the Signal A+ signal and the Signal A- signal to the High level. The chip set 140 sets both the Signal B+ signal and the Signal B- signal to the High level.

If the POS terminal 1 is turned off, the VBUS signal becomes the Low level because no electric power is supplied from the power supply circuit 150. Even if the POS terminal 1 is turned off and the VBUS signal becomes the low level, the current also flows out from the chip set 140. The Signal A+ signal, the Signal A- signal, the Signal B+ signal, and the Signal B- signal all maintain the High level.

Thereafter, when the POS terminal 1 is turned on, the VBUS signal becomes the High level because the electric power is supplied from the power supply circuit 150. Even if the VBUS signal becomes the High level, the current also flows out from the chip set 140. Therefore, the Signal A+ signal, the Signal A- signal, the Signal B+ signal, and the Signal B- signal all maintain the High level.

Therefore, the chip set 140 cannot output a bus reset signal for setting both the D+ signal and the D- signal to the Low level and initializing the connection state. Furthermore, since the D+ signal and the D- signal are both at the high level, the chip set 140 and the USB device 2 cannot determine the communication speed according to the Chirp handshake. Therefore, the POS terminal 1 and the USB device 2 cannot communicate with each other.

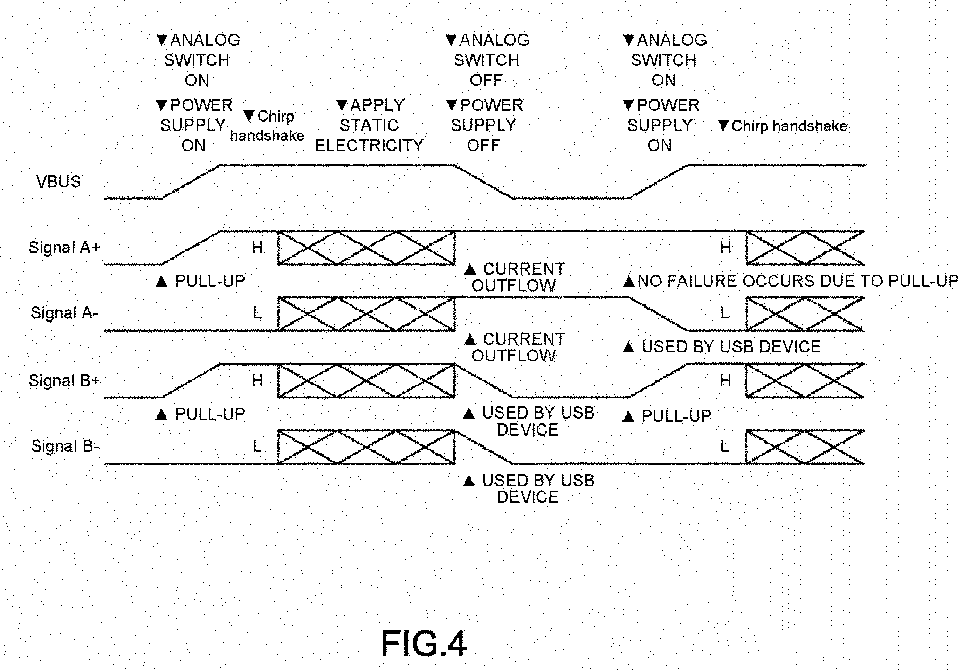

Next, in an embodiment, the operation of the circuit when the static electricity is applied and the current flows out from the chip set 140 is described. Here, Fig. 4 is a timing chart illustrating the outline of the connection process when the current flows out from the chip set 140 in the electronic circuit board 10 according to an embodiment. The timing chart shown in Fig. 4 shows the outline of the connection process in a case in which the electronic circuit board 10 has the analog switch 160.

When the power of the POS terminal 1 is turned on, the analog switch 160 connects the chip set 140 and the USB connector 170 as it receives the input of the power supply signal from the power supply circuit 150. The analog switch 160 connects the Signal A+ signal and the Signal B+ signal. Furthermore, the analog switch 160 connects the Signal A- signal and the Signal B- signal.

When the power supply of the POS terminal 1 is turned on, the VBUS signal becomes the High level because it receives power supplied from the power supply circuit 150.

The Signal B+ signal becomes the High level due to the influence of the pull-up resistor 21 supplied with the electric power according to the VBUS signal. Since the chip set 140 and the USB connector 170 are connected with each other, the Signal A+ signal becomes the High level as the Signal B+ signal becomes the High level.

The static electricity is applied to the chip set 140 due to the electrostatic discharge. As a result, the current flows out from the chip set 140. Both the Signal A+ signal and the Signal A- signal become the High level. The Signal B+ signal and the Signal B- signal become the High level as the Signal A+ signal and the Signal A- signal are connected with each other by the analog switch 160.

When the POS terminal 1 is turned off, the VBUS signal becomes the Low level because no electric power is supplied from the power supply circuit 150.

The analog switch 160 disconnects the chip set 140 from the USB connector 170 because there is no input of the power supply signal from the power supply circuit 150. The Signal A+ signal and the Signal A- signal become the High level as the current flows out from the chip set 140.

On the other hand, since the Signal B+ signal and the Signal B- signal are disconnected from the chip set 140 by the analog switch 160, no current flows out from the chip set 140. The Signal B+ signal and the Signal B- signal also become the Low level as the current flowing out from the chip set 140 is also used by the USB device 2.

Thereafter, when the POS terminal 1 is turned on, the VBUS signal becomes the High level because the electric power is supplied from the power supply circuit 150.

When the power supply of the POS terminal 1 is turned on, the analog switch 160 connects the chip set 140 and the USB connector 170 as it receives the input of the power supply signal from the power supply circuit 150. The analog switch 160 connects the Signal A+ signal and the Signal B+ signal. Furthermore, the analog switch 160 connects the Signal A- signal and the Signal B- signal.

Even when the chip set 140 and the USB connector 170 are connected to each other by the analog switch 160, the Signal A+ signal becomes the High level because the current flows out from the chip set 140. Here, the Signal B+ signal becomes the High level due to the influence of the pull-up resistor 21 supplied with the electric power according to the VBUS signal. Since the Signal A+ signal is connected to the Signal B+ signal, the Signal A+ signal becomes the High level as the Signal B+ signal becomes the High level. In other words, regardless of whether the static electricity is applied, the failure does not occur because the Signal A+ signal becomes the high level when the VBUS signal is at the High level.

When the Signal A- signal is connected to the Signal B-signal by the analog switch 160, the current flowing out from the chip set 140 is used by the USB device 2. The Signal B- signal is not influenced by the pull-up resistor 21. As a result, the Signal A- signal becomes the Low level.

Therefore, when the VBUS signal is at the Low level, the connection in the electronic circuit board 10 is disconnected by the analog switch 160, and thus, both the Signal B+ signal and the Signal B- signal become the Low level and the bus reset signal can be output. Furthermore, when the VBUS signal is at the high level, the POS terminal 1 and the USB device 2 can determine the communication speed according to the Chirp handshake as the Signal B+ signal becomes the High level and the Signal B- signal becomes the Low level. In other words, it can be determined that the POS terminal 1 and the USB device 2 can operate in the full speed mode or the high speed mode. Therefore, the POS terminal 1 and the USB device 2 can perform the communication based on the USB even when the static electricity is applied due to the electrostatic discharge.

As described above, according to the electronic circuit board 10, the analog switch 160 cuts off the connection between the chip set 140 and the USB connector 170. In this case, as shown in the timing chart shown in Fig. 4, the Signal B+ signal becomes High level and the Signal B- signal becomes the Low level. Therefore, the electronic circuit board 10 can be restored from communication failure due to the electrostatic discharge.

Furthermore, the analog switch 160 disconnects the chip set 140 from the USB connector 170 based on the power supply signal from the power supply circuit 150. In other words, the analog switch 160 disconnects the chip set 140 from the USB connector 170 when the POS terminal 1 stops, i.e., when the POS terminal 1 is shut down or restarted. Therefore, a user can restore the POS terminal 1 from the communication failure due to the electrostatic discharge by an operation of shutting down the POS terminal 1 or an operation of restarting the POS terminal 1.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A connection circuit powered by a power supply circuit, comprising:
a connector configured to connect with an external device;
a chip set configured to connect with the connector via one or more data lines and control serial communication with the external device via the data lines; and
a switch circuit arranged between the connector and the chip set and configured to disconnect a connection between the connector and the chip set via the data lines when power is not supplied from the power supply circuit.

2. The connection circuit according to claim 1, wherein
the chip set controls the serial communication according to a Universal Serial Bus (USB) protocol.

3. The connection circuit according to claim 1 or 2, wherein
the switch circuit comprises a field effect transistor.

4. The connection circuit according to any one of claims 1 to 3, wherein
when the power is supplied from the power supply circuit, the connector supplies power to the external device.

5. The connection circuit according to any one of claims 1 to 4, wherein
the data lines are a pair of differential transmission lines, and
the switch circuit disconnects the connection via the pair of differential transmission lines when the power is not supplied from the power supply circuit.

6. The connection circuit according to any one of claims 1 to 5, wherein
the switch circuit connects the connector and the chip set when the power is supplied from the power supply circuit.

7. The connection circuit according to any one of claims 1 to 6, wherein
the connection circuit is included in a point of sales (POS) terminal, and
the switch circuit disconnects the connection when the POS terminal is shut down.

8. The connection circuit according to any one of claims 1 to 6, wherein
the connection circuit is included in a POS terminal, and
the switch circuit disconnects the connection when the POS terminal is restarted.

9. The connection circuit according to any one of claims 1 to 8, wherein
the chip set communicates with the external device to determine a speed mode for the serial communication after the power is supplied from the power supply circuit and the switch circuit connects the connector and the chip set.

10. An information processing apparatus comprising:
a power supply circuit; and
the connection circuit according to any one of claims 1 to 9.
